# EUROPÄISCHE PATENTSCHRIFT

(11) **EP 4 331 914 B1**
(45) Veröffentlichungstag und Bekanntmachung des Hinweises auf die Patenterteilung: **04.06.2025**
(21) Anmeldenummer: 22193614.9
(22) Anmeldetag: 02.09.2022
(51) Int. Cl.: B60Q 7/02, B60Q 1/30, B60Q 1/26, B60Q 1/48, F21V 21/22

(54) **SIGNALEINRICHTUNG FÜR HERAUSRAGENDEM LADEGUT EINES FAHRZEUGS**
SIGNALLING DEVICE FOR OVERHANGING LOAD ON A VEHICLE
DISPOSITIF DE SIGNALISATION POUR CHARGE HORS-GABARIT DE VEHICLE

(43) Veröffentlichungstag der Anmeldung: 06.03.2024
(73) Patentinhaber: EPSILON Kran GmbH., 5020 Salzburg (AT)
(72) Erfinder: ROHRMOSER, Florian, 5611 Grossarl (AT); HETZ, Johannes, 5431 Kuchl (AT); PAUSCH, Christian, 5452 Pfarrwerfen (AT)
(74) Vertreter: Torggler & Hofmann Patentanwälte - Innsbruck

(56) Entgegenhaltungen:
- EP-A1- 0 552 844
- EP-A1- 2 589 512
- FR-A1- 2 594 390
- FR-A1- 2 615 800
- FR-A1- 3 037 297
- US-A- 2 764 120
- US-A- 3 691 366
- US-A- 3 822 899
- US-A- 4 369 902
- US-A1- 2014 026 451
- UNKNOWN: "Richtlinie für die Kenntlichmachung überbreiter und überlanger Straßenfahrzeuge, Fahrzeugkombinationen sowie bestimmter hinausragender Ladungen", 12 February 2019 (2019-02-12), pages 1 - 4, XP093213042, Retrieved from the Internet <URL:https://www.lra-ffb.de/fileadmin/user_upload/lra-ffb/pdf/4/43/Richtlinie_fuer_die_Kenntlichmachung_ueberbreiter_und_-langer_Fzge.pdf>

## Beschreibung

Die vorliegende Erfindung betrifft eine Anordnung aus einer längenveränderbaren Lagervorrichtung und einem Überlängenschild gemäß dem Oberbegriff des Anspruchs 1 sowie ein Lastfahrzeug mit einem Fahrzeugrahmen und einer solchen Anordnung.

Im Stand der Technik sind Lagervorrichtungen für Überlängenschilder zur Kennzeichnung von überstehender Ladung bekannt. Auch sind ausziehbare Lagervorrichtungen für ein Überlängenschild zur Kennzeichnung von überstehender Ladung eines Lastfahrzeugs bekannt, welche je nach Überstand der Ladung eines Lastfahrzeugs ein entsprechendes Positionieren des Überlängenschildes erlauben. Dazu kann beispielsweise ein fest an einer Stange montiertes Überlängenschild mit einer an einem Rahmen eines Lastfahrzeugs befestigten Halterung in Form einer Schelle in einem entsprechenden Ausziehzustand fixiert werden. Wird das Überlängenschild nicht zur Kennzeichnung von überstehender Ladung benötigt, kann die Stange mit dem Überlängenschild aus der Halterung entfernt und getrennt mittransportiert werden, oder das Überlängenschild kann in einem eingefahrenen Zustand am Lastfahrzeug mittransportiert werden, wobei dabei eine Abdeckung zum Sichtschutz und Schutz vor äußeren Einflüssen verwendet werden muss. Beide Varianten sind nachteilig mit erhöhtem Arbeitsaufwand und erhöhter Anfälligkeit für Beschädigungen behaftet. Die Patentanmeldung US2764120A beschreibt ein Fahrzeugsignalgerät zur Kennzeichnung überstehender Ladungen. Es besteht aus einem teleskopischen Arm mit schwenkbaren Signalplatten, die unter dem Fahrzeugboden montiert werden und bei Bedarf in eine sichtbare Position ausgefahren werden können.

Aufgabe der Erfindung ist es, eine gegenüber dem Stand der Technik verbesserte Lagervorrichtung mit einem Überlängenschild anzugeben, bei welcher die zuvor genannten Nachteile nicht auftreten.

Die Aufgabe wird von einer Anordnung aus einer längenveränderbaren Lagervorrichtung und einem Überlängenschild mit den Merkmalen des Anspruchs 1, sowie einem Lastfahrzeug mit einer solchen Anordnung gelöst.

Vorteilhafte Ausführungen sind in den abhängigen Ansprüchen definiert.

Eine erfindungsgemäße Anordnung umfasst eine längenveränderbare Lagervorrichtung für ein Überlängenschild zur Kennzeichnung von überstehender Ladung eines Lastfahrzeugs und ein Überlängenschild. Eine Kennzeichnung von überstehender Ladung eines Lastfahrzeugs kann zum sicheren Einsatz eines Lastfahrzeugs mit überstehender Ladung im Straßenverkehr vorgeschrieben sein. Die Lagervorrichtung dient der Lagerung des Überlängenschildes und ist an einem Fahrzeugrahmen eines Lastfahrzeugs montierbar. Die Lagervorrichtung kann ein an einem Überstand einer Ladung eines Lastfahrzeugs angepasstes Positionieren des Überlängenschildes erlauben.

Zur Längenverstellung weist die Lagervorrichtung zumindest einen ersten Teleskopteil und einen relativ zum ersten Teleskopteil bewegbaren zweiten Teleskopteil auf, wobei der erste Teleskopteil an einem Fahrzeugrahmen eines Lastfahrzeugs montierbar ist.

Erfindungsgemäß ist vorgesehen, dass das Überlängenschild schwenkbar am zweiten Teleskopteil gelagert ist und in zumindest einer Schwenkstellung relativ zum zweiten Teleskopteil lösbar arretierbar ist.

In zumindest einer lösbar arretierbaren Schwenkstellung kann das Überlängenschild zur Kennzeichnung von überstehender Ladung verwendbar sein. Dabei kann das Überlängenschild beispielsweise an einem freien Ende des zweiten Teleskopteils abstehend anordenbar sein. In zumindest einer lösbar arretierbaren Schwenkstellung kann das Überlängenschild für andere Verkehrsteilnehmer sichtbar an einem Fahrzeugrahmen eines Lastfahrzeugs anordenbar sein. Durch die schwenkbare Lagerung kann das Überlängenschild im Gegensatz zu einer starren Montage bei äußeren Krafteinwirkungen verschwenken, womit Beschädigungen vermieden werden.

Wird das Überlängenschild nicht zur Kennzeichnung von überstehender Ladung benötigt, kann das Überlängenschild durch Verschwenken verstaubar sein. In zumindest einer lösbar arretierbaren Schwenkstellung kann das Überlängenschild für andere Verkehrsteilnehmer nicht sichtbar an einem Fahrzeugrahmen eines Lastfahrzeugs anordenbar sein.

Der zumindest eine erste Teleskopteil und der zumindest eine zweite Teleskopteil können in Form von zumindest abschnittsweise ineinander verschachtelt angeordneten und zueinander verschiebbaren Rohren ausgebildet sein. Durch eine zumindest abschnittsweise ineinander verschachtelte und zueinander verschiebbare Anordnung kann eine geführte Bewegung des zweiten Teleskopteils zum ersten Teleskopteil ermöglicht werden.

Dabei können der zumindest eine erste Teleskopteil und der zumindest eine zweite Teleskopteil zur Verdrehsicherung jeweils eine von einem kreisrunden Querschnitt abweichende Querschnittsform aufweisen. Insbesondere können die Teleskopteile jeweils eine rechteckige Querschnittsform aufweisen.

Erfindungsgemäß ist das Überlängenschild an einem schwenkbar am zweiten Teleskopteil gelagerten Tafelträger zur Montage des Überlängenschildes an der Lagervorrichtung montiert Dadurch kann eine schwenkbare Lagerung getrennt von dem Überlängenschild ausgebildet werden. Das Überlängenschild kann dadurch auch einfach austauschbar sein.

Der schwenkbar am zweiten Teleskopteil gelagerte Tafelträger kann zumindest zwischen einer Schwenkstellung zum Verstauen des Überlängenschildes, in welcher das Überlängenschild an das zweite Teleskopteil angenähert ist, und einer Schwenkstellung zur Verwendung des Überlängenschildes, in welcher das Überlängenschild im Wesentlichen rechtwinklig vom zweiten Teleskopteil absteht, verschwenkbar sein.

Das Überlängenschild kann in einer Schwenkstellung zum Verstauen des Überlängenschildes, in welcher das Überlängenschild an das zweite Teleskopteil angenähert ist, im Wesentlichen am zweiten Teleskopteil anliegen. In einem eingefahrenen Zustand der Lagervorrichtung kann das Überlängenschild dabei auch im Wesentlichen am ersten Teleskopteil anliegen, wenn der zumindest eine zweite Teleskopteil im Wesentlichen vollständig in den zumindest einen ersten Teleskopteil eingefahren ist.

Bei einer Anordnung der Lagervorrichtung an einem Fahrzeugrahmen kann eine Längenverstellung entlang einer Längsachse des Fahrzeugrahmens erfolgen, da ein Überstand einer Ladung gewöhnlich entlang einer Längsachse des Fahrzeugrahmens besteht. In einer Schwenkstellung zum Verstauen des Überlängenschildes, in welcher das Überlängenschild im Wesentlichen an den zweiten Teleskopteil - oder verstaut auch an den ersten Teleskopteil - angenähert ist, kann das Überlängenschild im Wesentlichen in Richtung einer Längsachse des Fahrzeugrahmens anordenbar sein. In einer Schwenkstellung zur Verwendung des Überlängenschildes, in welcher das Überlängenschild im Wesentlichen rechtwinklig vom zweiten Teleskopteil absteht, kann das Überlängenschild im Wesentlichen rechtwinklig zur Richtung einer Längsachse des Fahrzeugrahmens anordenbar sein.

Zur lösbaren Arretierung des schwenkbar am zweiten Teleskopteil gelagerten Tafelträgers können unterschiedliche Ausführungen der Arretierung für die schwenkbare Lagerung vorgesehen sein.

In einer ersten Ausführung kann der schwenkbar am zweiten Teleskopteil gelagerte Tafelträger eine Stellkontur mit zumindest einer Ausnehmung aufweisen, welche mit einem am zweiten Teleskopteil angeordneter Stellteil, beispielsweise einem federnden Druckstück, in Eingriff bringbar ist.

Alternativ oder in Kombination kann in einer zweiten Ausführung der schwenkbar am zweiten Teleskopteil gelagerte Tafelträger zumindest ein Stellteil, beispielsweise ein federndes Druckstück, aufweisen, welches mit zumindest einer am zweiten Teleskopteil angeordneten Ausnehmung in Eingriff bringbar ist.

Alternativ oder in Kombination kann in einer dritten Ausführung die Lagervorrichtung zwei Hülsen mit in Eingriff bringbaren Stirnverzahnungen aufweisen, wobei der zweite Teleskopteil eine erste Hülse aufweist und der schwenkbar am zweiten Teleskopteil gelagerte Tafelträger eine zweite federgelagerte Hülse aufweist.

Der Tafelträger kann durch einen Eingriff, also etwa durch einen Eingriff eines Stellteils mit einer Ausnehmung oder durch in Eingriff stehende Stirnverzahnungen, in zumindest einer Schwenkstellung relativ zum zweiten Teleskopteil lösbar arretierbar sein.

Die Lagervorrichtung kann eine Arretiervorrichtung zur Arretierung zumindest einer Teleskopstellung zwischen dem zumindest einen erste Teleskopteil und dem zumindest einen zweiten Teleskopteil aufweisen. Dazu kann beispielsweise am ersten Teleskopteil ein Stellteil angeordnet sein, welches mit zumindest einer Ausnehmung im oder am zweiten Teleskopteil in Eingriff bringbar ist. Der Stellteil kann beispielsweise als federnd gelagerter Bolzen ausgebildet sein.

Vorteilhaft ist die Arretiervorrichtung an einem dem Überlängenschild zugewandten Ende des ersten Teleskopteils angeordnet.

Die Lagervorrichtung kann eine Beleuchtungs- und Signaleinrichtung zur Beleuchtung des Überlängenschildes und zur optischen Signalisierung überstehender Ladungen aufweisen. Die Beleuchtungs- und Signaleinrichtung kann ein am Tafelträger angeordnetes Leuchtmittel aufweisen.

Die Beleuchtungs- und Signaleinrichtung kann in einer ersten Ausführung abhängig von der Teleskopstellung zwischen dem zumindest einen ersten Teleskopteil und dem zumindest einen zweiten Teleskopteil mit einem Schalter schaltbar sein. Bei einer Ausführung mit zumindest abschnittsweise ineinander verschachtelt angeordneten und zueinander verschiebbaren Rohren kann ein am ersten Teleskopteil anordenbarer Schalter in Abhängigkeit von der Stellung des zweiten Teleskopteils schaltbar sein.

Die Beleuchtungs- und Signaleinrichtung kann in einer zweiten Ausführung abhängig von der Schwenkstellung zwischen dem schwenkbar am zweiten Teleskopteil gelagerten Überlängenschildes und dem zweiten Teleskopteil mit einem Schalter schaltbar sein. Bei einer derartigen Ausführung kann ein am zweiten Teleskopteil anordenbarer Schalter in Abhängigkeit von der Schwenkstellung des schwenkbar am zweiten Teleskopteil gelagerten Überlängenschildes schaltbar sein.

Die Beleuchtungs- und Signaleinrichtung kann in einer dritten Ausführung abhängig der Schaltstellung eines Schalters, beispielsweise in Form eines Druck- oder Kippschalters, schaltbar sein. Bei einer derartigen Ausführung kann ein am zweiten Teleskopteil oder beim schwenkbar am zweiten Teleskopteil gelagerten Überlängenschild anordenbarer Schalter in Abhängigkeit der Schaltstellung, unabhängig der Position des zweiten Teleskopteils oder der Schwenkstellung des am zweiten Teleskopteil gelagerten Überlängenschildes schaltbar sein.

Zur Energieversorgung der Beleuchtungs- und Signaleinrichtung kann in einem Innenberiech des zumindest einen ersten Teleskopteils und des zumindest einen zweiten Teleskopteils eine Versorgungsleitung der Beleuchtungs- und Signaleinrichtung gelagert sein. Vorteilhaft ist die Versorgungsleitung zumindest abschnittsweise in Form eines Spiralkabels ausgebildet, wodurch die Leitungslänge der Versorgungsleitung bei einer Längenänderung der Lagervorrichtung einfach anpassbar ist.

Vorteilhaft kann die Lagervorrichtung zur Lagerung des zumindest einen zweiten Teleskopteils in dem zumindest einen ersten Teleskopteil zumindest einen relativ zum ersten Teleskopteil verstellbaren Gleitstein aufweisen, wobei ein Lagerspiel der Lagervorrichtung durch eine Verstellung des zumindest einen Gleitsteins einstellbar ist, beispielsweise um auch unter erhöhter Schmutzbelastung die Verstellbarkeit des zweiten Teleskopteils zu bewahren. Weiter kann das erste Teleskopteil vorteilhaft an der in Montagelage dem befahrbaren Boden zugwandten Seite Öffnungen aufweisen, durch welche Schmutzansammlungen austreten können.

Schutz wird auch begehrt für ein Lastfahrzeug mit einem Fahrzeugrahmen und einer wie zuvor beschriebenen Anordnung aus einer Lagervorrichtung und einem Überlängenschild.

Die Lagervorrichtung, insbesondere der erste Teleskopteil, kann mit dem Fahrzeugrahmen verbindbar oder verbunden sein. Das Überlängenschild kann mit der Lagervorrichtung zwischen zumindest einer ersten Position, in welcher das Überlängenschild im Wesentlichen vollständig außerhalb des Fahrzeugrahmens anordenbar ist, und zumindest einer zweiten Position, in welcher das Überlängenschild im Wesentlichen vollständig innerhalb des Fahrzeugrahmens anordenbar ist, bewegbar sein.

Insbesondere kann das Überlängenschild in einer Schwenkstellung, in welcher das Überlängenschild im Wesentlichen an den ersten und/oder zweiten Teleskopteil angenähert ist, im Wesentlichen vollständig innerhalb des Fahrzeugrahmens anordenbar sein.

Ausführungsbeispiele der Erfindung werden anhand der Figuren diskutiert. Es zeigen:
Fig. 1a und 1b Seitenansichten eines Lastfahrzeugs mit unterschiedlichen Stellungen der Lagervorrichtung
Fig. 2a und 2b Ansichten einer Lagervorrichtung mit einem Überlängenschild
Fig. 3a und 3b den ersten und den zweiten Teleskopteil der Lagervorrichtung in Isolation
Fig. 4 eine Detailansicht einer Lagervorrichtung mit einem Überlängenschild in einer Schwenkstellung zum Verstauen
Fig. 5 eine weitere Detailansicht einer Lagervorrichtung mit einem Überlängenschild in einer Schwenkstellung zum Verstauen
Fig. 6a bis 6c Ansichten einer Lagervorrichtung mit einem Überlängenschild in verschiedenen Schwenkstellungen
Fig. 7 eine Detailansicht einer in einem Innenberiech der Lagervorrichtung verlaufenden Versorgungsleitung
Fig. 8a bis 8c eine erste Ausführung der Arretierung für die schwenkbare Lagerung des Überlängenschilds
Fig. 9a und 9b eine zweite Ausführung der Arretierung für die schwenkbare Lagerung des Überlängenschilds
Fig. 10a und 10b eine dritte Ausführung der Arretierung für die schwenkbare Lagerung des Überlängenschilds

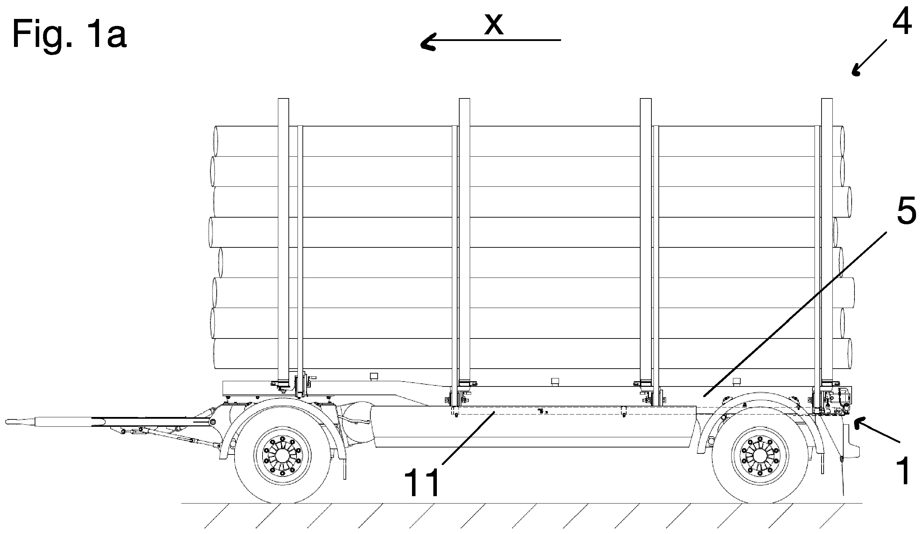

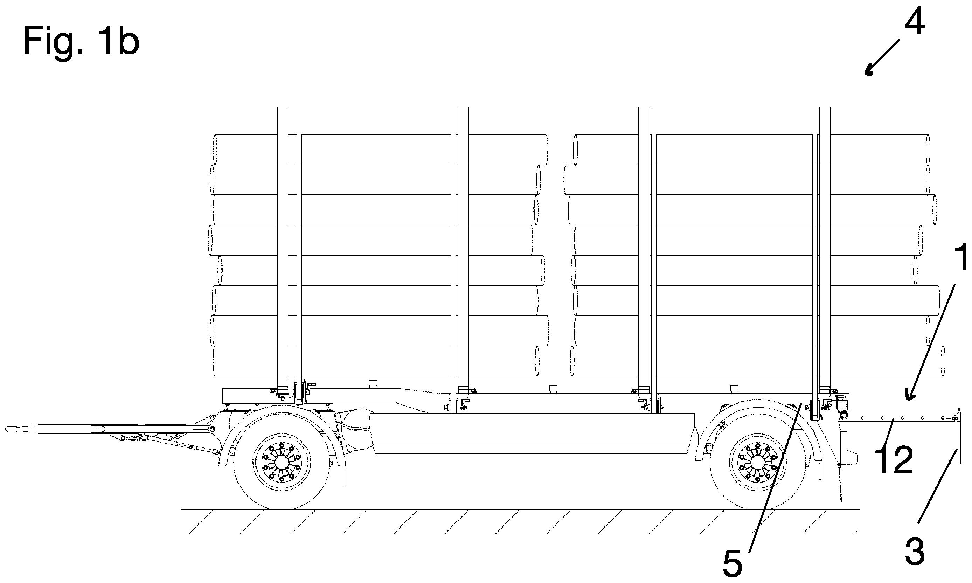

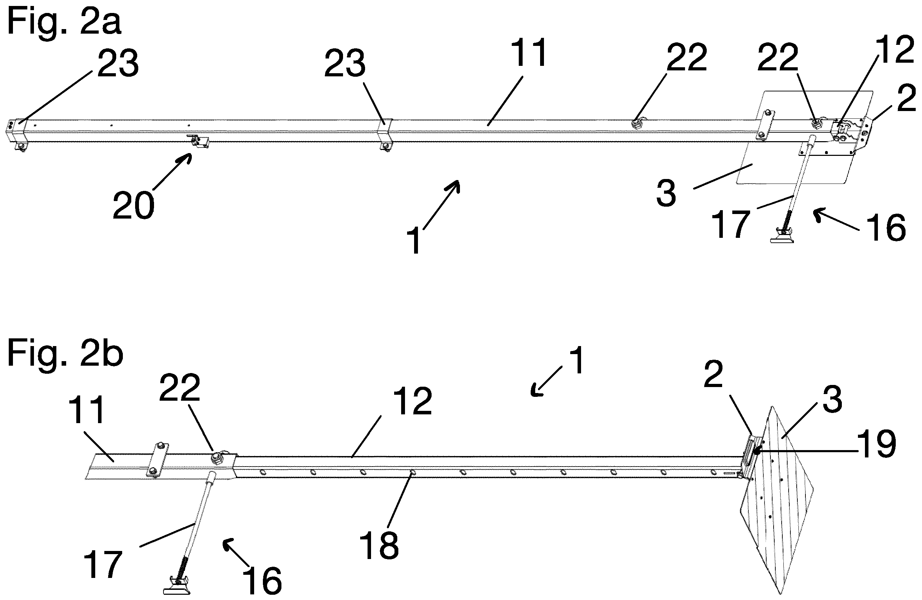

In den Figuren 1a und 1b sind Seitenansichten eines Lastfahrzeugs 4 gezeigt, welches eine am Fahrzeugrahmen 5 montierte und wie in den Figuren 2a und 2b gezeigte Anordnung aus einer längenveränderbaren Lagervorrichtung 1 für ein Überlängenschild 3 und ein Überlängenschild 3 aufweist.

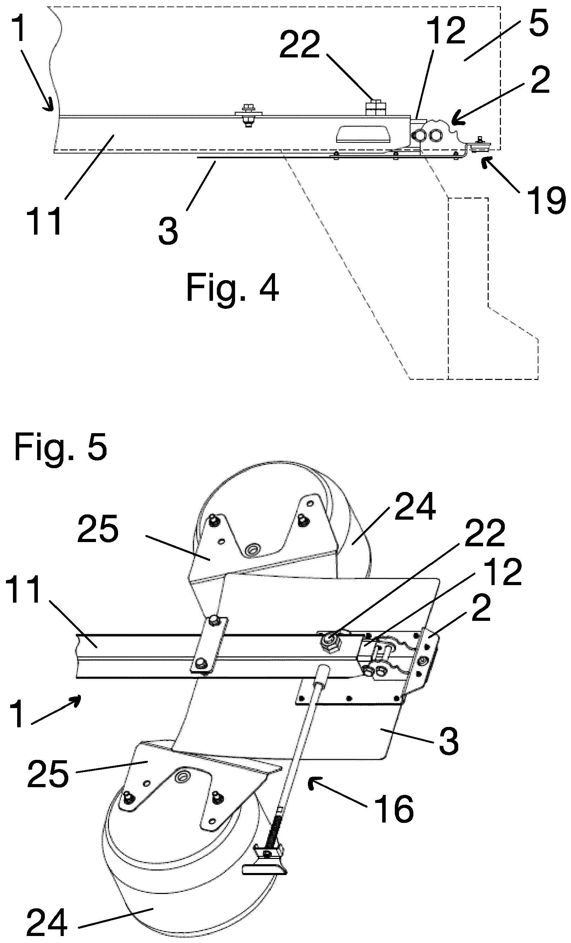

In Figur 1a ist das Lastfahrzeug 4 mit einer Ladung gezeigt, welche entlang der Längsrichtung x des Fahrzeugrahmens 5 heckseitig nicht wesentlich über den Fahrzeugrahmen hinaussteht. Die Verwendung eines Überlangenschildes 3 ist somit nicht nötig, weshalb das Überlängenschild 3 im Wesentlichen vollständig innerhalb des Fahrzeugrahmens 5 angeordnet ist (siehe dazu auch Figur 4). Die Stellung der Lagervorrichtung 1 kann dabei der in Figur 2a gezeigten Stellung entsprechen.

In Figur 1b ist das Lastfahrzeug 4 mit einer Ladung gezeigt, welche entlang der Längsrichtung x des Fahrzeugrahmens 5 heckseitig über den Fahrzeugrahmen hinaussteht. Die Verwendung eines Überlangenschildes 3 ist in diesem Fall nötig, weshalb das Überlängenschild 3 gut sichtbar im Wesentlichen vollständig außerhalb des Fahrzeugrahmens 5 angeordnet ist. Die Stellung der Lagervorrichtung 1 kann dabei der in Figur 2b gezeigten Stellung entsprechen.

Bei einer wie in den Figuren 1a und 1b, sowie der Figur 4 gezeigten Anordnung der Lagervorrichtung 1 an einem Fahrzeugrahmen 5 kann eine Längenverstellung entsprechend entlang einer Längsachse x des Fahrzeugrahmens 5 erfolgen.

In den Figuren 2a und 2b ist jeweils eine Anordnung aus einer längenveränderbaren Lagervorrichtung 1 für ein Überlängenschild 3 zur Kennzeichnung von überstehender Ladung eines Lastfahrzeugs 4 und einem Überlängenschild 3 gezeigt. Die Darstellungen unterscheiden sich in der Teleskopstellung der Lagervorrichtung 1 sowie in der Schwenkstellung des Überlängenschildes 3. Figur 2a zeigt eine im Wesentlichen vollständig eingefahrene Lagevorrichtung 1 und Figur 2b zeigt eine zumindest teilweise ausgefahrene Lagevorrichtung 1.

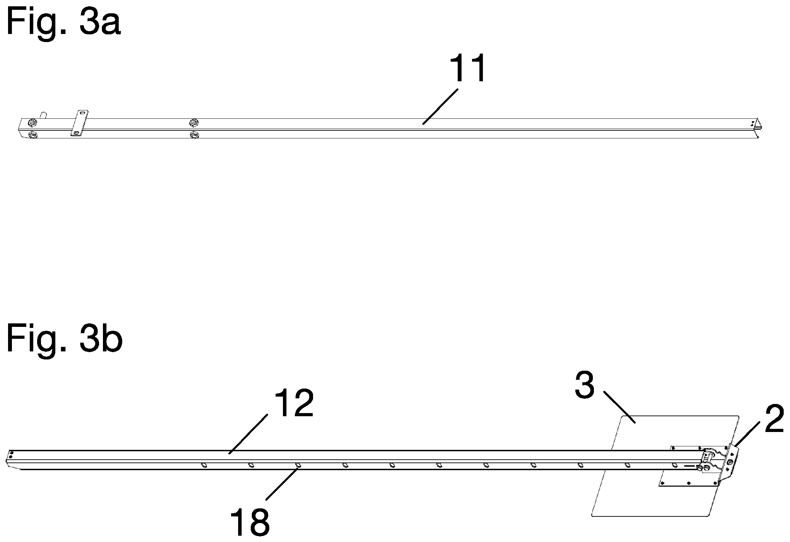

Die Lagervorrichtung 1 weist zumindest einen ersten Teleskopteil 11, welcher in Figur 3a im Detail dargestellt ist, und einen relativ zum ersten Teleskopteil 11 bewegbaren zweiten Teleskopteil 12 aufweist, welcher in Figur 3b im Detail dargestellt ist. Der erste Teleskopteil 11 kann an einem Fahrzeugrahmen 5 eines Lastfahrzeugs 4 montiert werden, beispielsweise mit den in Figur 2a gezeigten Befestigungsschellen 23.

Das Überlängenschild 3 ist schwenkbar am zweiten Teleskopteil 12 gelagert und ist vorteilhaft in zumindest einer Schwenkstellung relativ zum zweiten Teleskopteil 12 lösbar arretierbar.

In der dargestellten Ausführung sind der zumindest eine erste Teleskopteil 11 und der zumindest eine zweite Teleskopteil 12 in Form von zumindest abschnittsweise ineinander verschachtelt angeordneten und zueinander verschiebbaren Rohren ausgebildet. Zur Verdrehsicherung weisen der erste Teleskopteil 11 und der zweite Teleskopteil 12 jeweils eine von einem kreisrunden Querschnitt abweichende Querschnittsform, in der gezeigten Ausführung eine rechteckige Querschnittsform, auf.

Das Überlängenschild 3 ist an einem schwenkbar am zweiten Teleskopteil 12 gelagerten Tafelträger 2 zur Montage des Überlängenschildes 3 an der Lagervorrichtung 1 montiert.

Durch die schwenkbare Lagerung ist der am zweiten Teleskopteil 12 gelagerte Tafelträger 2 zumindest zwischen einer Schwenkstellung zum Verstauen des Überlängenschildes **3,** in welcher das Überlängenschild 3 im Wesentlichen an den zweiten Teleskopteil 12 angenähert ist oder an diesem anliegt, und einer Schwenkstellung zur Verwendung des Überlängenschildes 3, in welcher das Überlängenschild 3 im Wesentlichen rechtwinklig vom zweiten Teleskopteil 12 absteht, verschwenkbar.

Bei einer in Längsrichtung x eines Fahrzeugrahmens 5 verlaufenden Anordnung der Lagervorrichtung 1 kann in einer Schwenkstellung zum Verstauen des Überlängenschildes 3, in welcher das Überlängenschild 3 im Wesentlichen an den zweiten Teleskopteil 12 angenähert ist, das Überlängenschild 2 im Wesentlichen in Richtung einer Längsachse x, insbesondere parallel einer Längsachse x, des Fahrzeugrahmens 5 anordenbar sein. Eine solche Schwenkstellung ist etwa in den Figuren 1a, 2a, 3b, 4, 5, 6a, 8b, 8c, 9a, 9b, 10a und 10b gezeigt.

In einer Schwenkstellung zur Verwendung des Überlängenschildes 3, in welcher das Überlängenschild 3 im Wesentlichen rechtwinklig vom zweiten Teleskopteil 12 absteht, kann das Überlängenschild 3 im Wesentlichen rechtwinklig zur Richtung einer Längsachse x des Fahrzeugrahmens 5 anordenbar sein. Eine solche Schwenkstellung ist etwa in den Figuren 1b, 2b und 6b gezeigt.

Die Lagervorrichtung 1 kann eine Arretiervorrichtung 16 zur Arretierung von zumindest einer Teleskopstellung zwischen dem zumindest einen ersten Teleskopteil 11 und dem zumindest einen zweiten Teleskopteil 12 aufweisen. Dazu kann wie in den Figuren 2b und 5 dargestellt am ersten Teleskopteil 11 ein Stellteil 17 angeordnet sein, welches mit zumindest einer Ausnehmung 18 im oder am zweiten Teleskopteil 12 in Eingriff bringbar ist. Der Stellteil kann beispielsweise als federnd gelagerter Bolzen ausgebildet sein.

Vorteilhaft ist die Arretiervorrichtung 16 an einem dem Überlängenschild 3 zugewandten Ende des ersten Teleskopteils 11 angeordnet.

Figur 4 zeigt eine Detailansicht des Hecks des Lastfahrzeugs 4 der Figur 1a, wobei das Überlängenschild 3 in einer Schwenkstellung gezeigt ist, in welcher das Überlängenschild 3 an das zweite Teleskopteil 12 angenähert ist. Da der zumindest eine zweite Teleskopteil 12 im Wesentlichen vollständig in den zumindest einen ersten Teleskopteil 11 eingefahren ist, kann das Überlängenschild 3 an den ersten Teleskopteil 11 angenähert sein und insbesondere im Wesentlichen am ersten Teleskopteil 11 anliegen. In der gezeigten Schwenkstellung kann das Überlängenschild 3 im Wesentlichen vollständig innerhalb des Fahrzeugrahmens 5 angeordnet werden.

Figur 5 zeigt eine im Wesentlichen vollständig eingefahrene Lagervorrichtung 1 mit einem an das zweite Teleskopteil 12 angenäherten Überlängenschild 3. Zum Schutz vor einer Beschädigung der Luftbälge 24 einer Luftfederung eines Fahrwerks durch ein verstautes Überlängenschild 3 können Abweiser 25 vorgesehen sein.

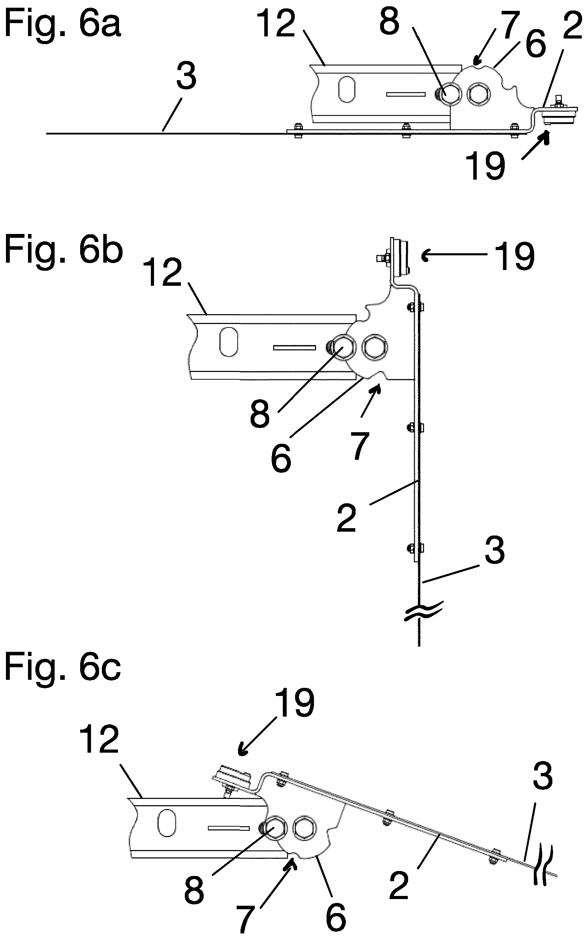

In den Figuren 6a bis 6c sind unterschiedliche Schwenkstellungen eines schwenkbar am zweiten Teleskopteil 12 gelagerten Tafelträgers 2 mit montiertem Überlängenschild 3 gezeigt. In Figur 6a ist der schwenkbar am zweiten Teleskopteil 12 gelagerte Tafelträger 2 in einer Schwenkstellung zum Verstauen des Überlängenschildes 3 gezeigt, in welcher das Überlängenschild 3 im Wesentlichen an den zweiten Teleskopteil (12) angenähert ist oder an diesem anliegt. In Figur 6b ist der schwenkbar am zweiten Teleskopteil 12 gelagerte Tafelträger 2 in einer Schwenkstellung zur Verwendung des Überlängenschildes 3 gezeigt, in welcher das Überlängenschild 3 im Wesentlichen rechtwinklig vom zweiten Teleskopteil 12 absteht. In Figur 6c ist der schwenkbar am zweiten Teleskopteil 12 gelagerte Tafelträger 2 in einer Schwenkstellung gezeigt, in welcher der Tafelträger 2 und das Überlängenschild 3 gegenüber der in Figur 6b gezeigten Schwenkstellung noch weiter verschwenkt sind. Eine solche Schwenkstellung kann sich beispielsweise durch eine äußere Krafteinwirkungen ergeben, bei welcher der Tafelträger 2 und das Überlängenschild 3 aus einer lösbar arretierten Schwenkstellung herausschwenken kann, um Beschädigungen zu vermeiden.

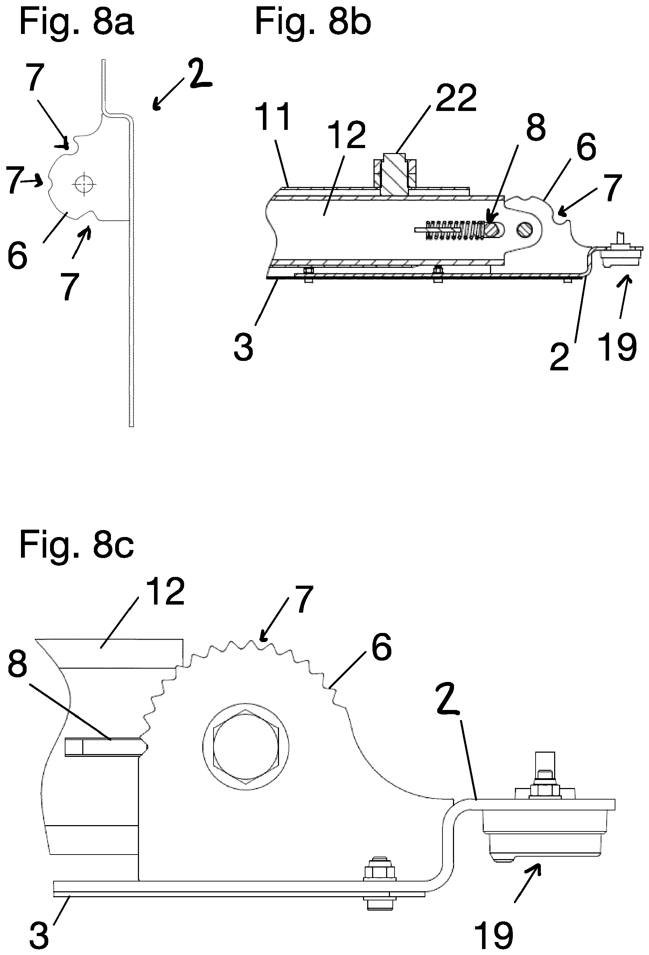

Ein Arretieren einer Schwenkstellung kann gemäß der in den Figuren 8a und 8b beschriebenen Ausführung erfolgen.

Wie in den Figuren 2b, 4, 6a bis 6c, 8b, 8c, 9b erkennbar, kann die Lagervorrichtung 1 eine Beleuchtungs- und Signaleinrichtung 19 zur Beleuchtung des Überlängenschildes 3 aufweist. Die Beleuchtungs- und Signaleinrichtung 19 ist wie dargestellt an einem oberen Ende des Tafelträgers 2 angeordnet.

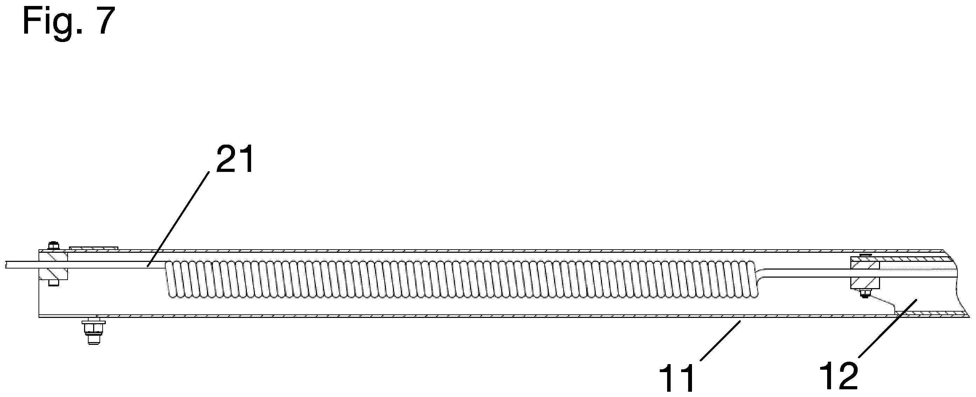

Die Beleuchtungs- und Signaleinrichtung 19 kann abhängig von der Teleskopstellung zwischen dem zumindest einen ersten Teleskopteil 11 und dem zumindest einen zweiten Teleskopteil 12 mit einem Schalter 20 schaltbar sein. In einem Innenberiech des zumindest einen ersten Teleskopteils 11 und des zumindest einen zweiten Teleskopteils 12 kann, wie in Figur 7 dargestellt, eine Versorgungsleitung 21 der Beleuchtungs- und Signaleinrichtung 19 gelagert sein, wobei die Versorgungsleitung 21 vorteilhaft zumindest abschnittsweise in Form eines Spiralkabels ausgebildet sein kann.

Wie in Figur 8b gezeigt, kann die Lagervorrichtung 1 zur Lagerung des zumindest einem zweiten Teleskopteils 12 in dem zumindest einen ersten Teleskopteil 11 zumindest einen relativ zum ersten Teleskopteil 11 beispielsweise über ein Gewinde verstellbaren Gleitstein 22 aufweisen. Ein Lagerspiel der Lagervorrichtung 1 kann durch eine Verstellung des zumindest einen Gleitsteins 22 einstellbar sein. Vorteilhaft ist der Gleitstein 22 an einem dem Überlängenschild 3 zugewandten Ende des ersten Teleskopteils 11 angeordnet.

Zur lösbaren Arretierung einer oder mehrerer Schwenkstellungen des schwenkbar am zweiten Teleskopteil 12 gelagerten Tafelträgers 2 können unterschiedliche Ausführungen vorgesehen sein.

In einer ersten in den Figuren 8a, 8b und auch 8c gezeigten Ausführung kann der schwenkbar am zweiten Teleskopteil 12 gelagerte Tafelträger 2 eine Stellkontur 6 mit zumindest einer Ausnehmung 7 aufweisen, welche mit einem am zweiten Teleskopteil 12 angeordneter Stellteil 8, beispielsweise einem federnden Druckstück, in Eingriff bringbar ist. Unterschiedliche lösbar arretierbare Schwenkstellungen für eine solche Ausführung sind in den Figuren 6a bis 6c gezeigt.

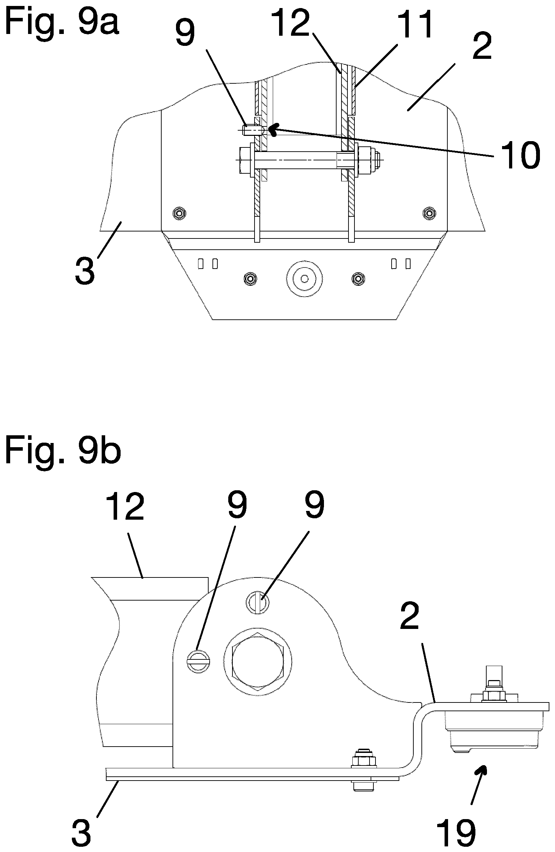

In einer zweiten in den Figuren 9a und 9b gezeigten Ausführung kann der schwenkbar am zweiten Teleskopteil 12 gelagerte Tafelträger zumindest ein Stellteil 9, beispielsweise ein federndes Druckstück, aufweisen, welches mit zumindest einer am zweiten Teleskopteil 12 angeordneten Ausnehmung 10 in Eingriff bringbar ist.

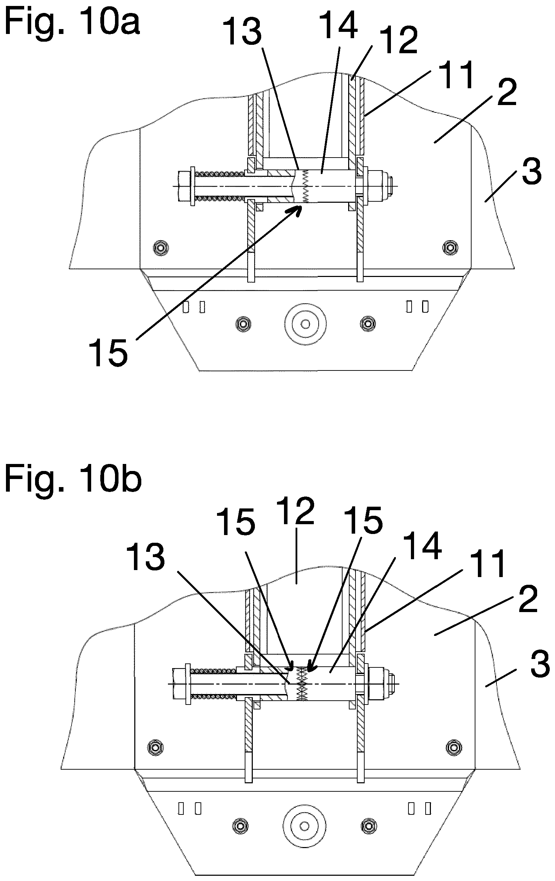

In einer dritten in den Figuren 10a und 10b gezeigten Ausführung kann die Lagervorrichtung 2 zwei Hülsen 13, 14 mit in Eingriff bringbaren Stirnverzahnungen 15 aufweisen, wobei der schwenkbar am zweiten Teleskopteil 12 gelagerte Tafelträger 2 eine vorteilhaft federnd gelagerte erste Hülse 13 aufweisen kann und der zweite Teleskopteil 12 eine zweite Hülse 14 aufweisen kann.

Der Tafelträger 2 kann jeweils durch einen Eingriff eines Stellteils 8, 9 mit einer Ausnehmung 7, 10 oder durch in Eingriff stehende Stirnverzahnungen 15 in zumindest einer Schwenkstellung relativ zum zweiten Teleskopteil 12 lösbar arretierbar sein.

### Bezugszeichenliste

- 1: Lagervorrichtung
- 2: Tafelträger
- 3: Überlängenschild
- 4: Lastfahrzeug
- 5: Fahrzeugrahmen
- 6: Stellkontur
- 7: Ausnehmung Stellkontur
- 8: Stellteil
- 9: Stellteil
- 10: Ausnehmung
- 11: erster Teleskopteil
- 12: zweiter Teleskopteil
- 13: erste Hülse
- 14: zweite Hülse
- 15: Stirnverzahnung
- 16: Arretiervorrichtung
- 17: Stellteil
- 18: Ausnehmung
- 19: Beleuchtungs- und Signaleinrichtung
- 20: Schalter
- 21: Versorgungsleitung
- 22: Gleitstein
- 23: Befestigungsschelle
- 24: Luftbalg
- 25: Abweiser

- x: Längsrichtung

## Patentansprüche

1. Anordnung aus einer längenveränderbaren Lagervorrichtung (1) für ein Überlängenschild (3) zur Kennzeichnung von überstehender Ladung eines Lastfahrzeugs (4) und einem Überlängenschild (3), wobei die Lagervorrichtung (1) zumindest einen ersten Teleskopteil (11) und einen relativ zum ersten Teleskopteil (11) bewegbaren zweiten Teleskopteil (12) aufweist, wobei der erste Teleskopteil (11) an einem Fahrzeugrahmen (5) eines Lastfahrzeugs (4) montierbar ist, **dadurch gekennzeichnet, dass** das Überlängenschild (3) schwenkbar am zweiten Teleskopteil (12) gelagert ist und in zumindest einer Schwenkstellung relativ zum zweiten Teleskopteil (12) lösbar arretierbar ist, wobei das Überlängenschild (3) an einem schwenkbar am zweiten Teleskopteil (12) gelagerten Tafelträger (2) zur Montage des Überlängenschildes (3) an der Lagervorrichtung (1) montiert ist.

2. Anordnung nach dem vorangehenden Anspruch, wobei der zumindest eine erste Teleskopteil (11) und der zumindest eine zweite Teleskopteil (12) in Form von zumindest abschnittsweise ineinander verschachtelt angeordneten und zueinander verschiebbaren Rohren ausgebildet sind.

3. Anordnung nach dem vorangehenden Anspruch, wobei der zumindest eine erste Teleskopteil (11) und der zumindest eine zweite Teleskopteil (12) zur Verdrehsicherung jeweils eine von einem kreisrunden Querschnitt abweichende Querschnittsform, vorzugsweise eine rechteckige Querschnittsform, aufweisen.

4. Anordnung nach einem der vorangehenden Ansprüche, wobei der schwenkbar am zweiten Teleskopteil (12) gelagerte Tafelträger (2) zumindest zwischen einer Schwenkstellung zum Verstauen des Überlängenschildes (3), in welcher das Überlängenschild (3) an den zweiten Teleskopteil (12) angenähert ist, und einer Schwenkstellung zur Verwendung des Überlängenschildes (3), in welcher das Überlängenschild (3) im Wesentlichen rechtwinklig vom zweiten Teleskopteil (12) absteht, verschwenkbar ist.

5. Anordnung nach einem der vorangehenden Ansprüche, wobei
- der schwenkbar am zweiten Teleskopteil (12) gelagerte Tafelträger (2) eine Stellkontur (6) mit zumindest einer Ausnehmung (7) aufweist, welche mit einem am zweiten Teleskopteil (12) angeordneter Stellteil (8) in Eingriff bringbar ist, und/oder
- der schwenkbar am zweiten Teleskopteil (12) gelagerte Tafelträger (2) zumindest ein Stellteil (9) aufweist, welches mit zumindest einer am zweiten Teleskopteil (12) angeordneten Ausnehmung (10) in Eingriff bringbar ist, und/oder
- die Lagervorrichtung (1) zweit Hülsen (13, 14) mit in Eingriff bringbaren Stirnverzahnungen (15) aufweist, wobei der zweite Teleskopteil (12) eine erste Hülse (13) aufweist und der schwenkbar am zweiten Teleskopteil (12) gelagerte Tafelträger (2) einen zweite Hülse (14) aufweist,
wobei der Tafelträger (2) durch einen Eingriff in zumindest einer Schwenkstellung relativ zum zweiten Teleskopteil (12) lösbar arretierbar ist.

6. Anordnung nach einem der vorangehenden Ansprüche, wobei die Lagervorrichtung (1) eine Arretiervorrichtung (16) zur Arretierung zumindest einer Teleskopstellung zwischen dem zumindest einen ersten Teleskopteil (11) und dem zumindest einen zweiten Teleskopteil (12) aufweist.

7. Anordnung nach dem vorangehenden Anspruch, wobei die Arretiervorrichtung an einem dem Überlängenschild (3) zugewandten Ende des ersten Teleskopteils (11) angeordnet ist

8. Anordnung nach einem der vorangehenden Ansprüche, wobei die Lagervorrichtung (1) eine Beleuchtungs- und Signaleinrichtung (19) zur Beleuchtung des Überlängenschildes (3) und/oder optischen Signalisierung überstehender Ladungen aufweist.

9. Anordnung nach dem vorangehenden Anspruch, wobei die Beleuchtungs- und Signaleinrichtung (19) abhängig von
- einer Teleskopstellung zwischen dem zumindest einen ersten Teleskopteil (11) und dem zumindest einen zweiten Teleskopteil (12) und/oder
- einer Schwenkstellung des Überlängenschild (3) relativ zum zweiten Teleskopteil (12) und/oder
- einer Schaltstellung eines manuell betätigbaren Schalters (20)
mit einem Schalter (20) schaltbar ist.

10. Anordnung nach einem der beiden vorangehenden Ansprüche, wobei in einem Innenberiech des zumindest einen ersten Teleskopteils (11) und des zumindest einen zweiten Teleskopteils (12) eine Versorgungsleitung (21) der Beleuchtungs- und Signaleinrichtung (19) gelagert ist, wobei vorzugsweise die Versorgungsleitung (21) zumindest abschnittsweise in Form eines Spiralkabels ausgebildet ist.

11. Anordnung nach einem der vorangehenden Ansprüche, wobei die Lagervorrichtung (1) zur Lagerung des zumindest einen zweiten Teleskopteils (12) in dem zumindest einen ersten Teleskopteil (11) zumindest einen relativ zum ersten Teleskopteil (11) verstellbaren Gleitstein (22) aufweist, wobei ein Lagerspiel der Lagervorrichtung (1) durch eine Verstellung des zumindest einen Gleitsteins (22) einstellbar ist.

12. Lastfahrzeug (4) mit einem Fahrzeugrahmen (5) und einer Anordnung aus einer Lagervorrichtung (1) und einem Überlängenschild (3) nach einem der vorangehenden Ansprüche, wobei die Lagervorrichtung (1) mit dem Fahrzeugrahmen (5) verbindbar oder verbunden ist und das Überlängenschild (3) mit der Lagervorrichtung (1) zwischen zumindest einer ersten Position, in welcher das Überlängenschild (3) im Wesentlichen vollständig außerhalb des Fahrzeugrahmens (5) anordenbar ist, und zumindest einer zweiten Position, in welcher das Überlängenschild (3) im Wesentlichen vollständig innerhalb des Fahrzeugrahmens (5) anordenbar ist, bewegbar ist.

13. Lastfahrzeug (4) nach dem vorangehenden Anspruch, wobei das Überlängenschild (3) in einer Schwenkstellung, in welcher das Überlängenschild (3) an den zweiten Teleskopteil (12) angenähert ist, im Wesentlichen vollständig innerhalb des Fahrzeugrahmens (5) anordenbar ist.

## Claims

1. Arrangement comprising a length-adjustable storage device (1) for an overlength plate (3) for marking protruding load of a load vehicle (4) and an overlength plate (3), wherein the storage device (1) has at least one first telescopic part (11) and a second telescopic part (12) movable relative to the first telescopic part (11), wherein the first telescopic part (11) can be mounted on a vehicle frame (5) of a load vehicle (4), **characterized in that** the overlength plate (3) is pivotably mounted on the second telescopic part (12) and can be releasably locked in at least one pivot position relative to the second telescopic part (12), wherein the overlength plate (3) is mounted on a plate carrier (2) that is pivotably mounted on the second telescopic part (12) for mounting the overlength plate (3) on the storage device (1) .

2. Arrangement according to the preceding claim, wherein the at least one first telescopic part (11) and the at least one second telescopic part (12) are designed in the form of pipes which at least in sections are arranged overlapping one another and are displaceable relative to one another.

3. Arrangement according to the preceding claim, wherein the at least one first telescopic part (11) and the at least one second telescopic part (12) each have a cross-sectional shape deviating from a circular cross-section, preferably a rectangular cross-sectional shape, for protecting against rotation.

4. Arrangement according to one of the preceding claims, wherein the plate carrier (2) pivotably mounted on the second telescopic part (12) is pivotable at least between a pivot position for storing the overlength plate (3), in which the overlength plate (3) is approximated to the second telescopic part (12), and a pivot position for using the overlength plate (3), in which the overlength plate (3) projects substantially at right angles from the second telescopic part (12).

5. Arrangement according to one of the preceding claims, wherein
- the plate carrier (2) pivotably mounted on the second telescopic part (12) has an adjusting contour (6) with at least one recess (7), which can be brought into engagement with an adjusting part (8) arranged on the second telescopic part (12), and/or
- the plate carrier (2) pivotably mounted on the second telescopic part (12) has at least one adjusting part (9) which can be brought into engagement with at least one recess (10) arranged on the second telescopic part (12), and/or
- the storage device (1) has two sleeves (13, 14) with engageable spur gear toothing (15), wherein the second telescopic part (12) has a first sleeve (13) and the plate carrier (2) pivotably mounted on the second telescopic part (12) has a second sleeve (14),
wherein the plate carrier (2) can be releasably locked in at least one pivot position relative to the second telescopic part (12) by means of an engagement.

6. Arrangement according to one of the preceding claims, wherein the storage device (1) has a locking device (16) for locking at least one telescope position between the at least one first telescope part (11) and the at least one second telescope part (12).

7. Arrangement according to the preceding claim, wherein the locking device is arranged at one end of the first telescope part (11) facing the overlength plate (3).

8. Arrangement according to one of the preceding claims, wherein the storage device (1) has an illumination and signaling device (19) for illuminating the overlength plate (3) and/or optically signaling protruding loads.

9. Arrangement according to the preceding claim, wherein the illumination and signaling device (19) can be switched with a switch, depending on
- a telescope position between the at least one first telescope part (11) and the at least one second telescope part (12) and/or
- a pivot position of the overlength plate (3) relative to the second telescopic part (12) and/or
- a switching position of a manually operated switch (20).

10. Arrangement according to one of the two preceding claims, wherein a supply line (21) of the illumination and signaling device (19) is mounted in an inner region of the at least one first telescopic part (11) and of the at least one second telescopic part (12), wherein the supply line (21) at least in sections is preferably in the form of a spiral cable.

11. Arrangement according to one of the preceding claims, wherein the storage device (1) for mounting the at least one second telescopic part (12) in the at least one first telescopic part (11) has at least one sliding block (22) which can be adjusted relative to the first telescopic part (11), wherein a bearing clearance of the storage device (1) can be adjusted by adjusting the at least one sliding block (22).

12. Load vehicle (4) having a vehicle frame (5) and an arrangement comprising a storage device (1) and an overlength plate (3) according to one of the preceding claims, wherein the storage device (1) can be connected or is connected to the vehicle frame (5), and the overlength plate (3) can be moved with the storage device (1) between at least a first position, in which the overlength plate (3) can be arranged substantially completely outside the vehicle frame (5), and at least a second position, in which the overlength plate (3) can be arranged substantially completely inside the vehicle frame (5).

13. Load vehicle (4) according to the preceding claim, wherein the overlength plate (3) can be arranged substantially completely within the vehicle frame (5) in a pivot position in which the overlength plate (3) is approximated to the second telescopic part (12).

## Revendications

1. Ensemble composé d'un dispositif de support (1) de longueur variable pour un panneau de surlongueur (3) pour le repérage d'un chargement en dépassement d'un véhicule de chargement (4) et d'un panneau de surlongueur (3), dans lequel le dispositif de support (1) présente au moins une première partie télescopique (11) et une deuxième partie télescopique (12) mobile par rapport à la première partie télescopique (11), dans lequel la première partie télescopique (11) peut être montée sur un cadre de véhicule (5) d'un véhicule de chargement (4), **caractérisé en ce que** le panneau de surlongueur (3) est logé de manière pivotante sur la deuxième partie télescopique (12) et peut être bloqué de manière libérable dans au moins une position de pivotement par rapport à la deuxième partie télescopique (12), dans lequel le panneau de surlongueur (3) est monté sur un porte-panneau (2) logé de manière pivotante sur la deuxième partie télescopique (12) pour le montage du panneau de surlongueur (3) sur le dispositif de support (1) .

2. Ensemble selon la revendication précédente, dans lequel l'au moins une première partie télescopique (11) et l'au moins une deuxième partie télescopique (12) sont réalisées sous la forme de tubes disposés de manière imbriquée les uns dans les autres au moins par sections et coulissants les uns par rapport aux autres.

3. Ensemble selon la revendication précédente, dans lequel l'au moins une première partie télescopique (11) et l'au moins une deuxième partie télescopique (12) pour la sécurité antirotation présentent chacune une forme de section transversale différente d'une section transversale circulaire, de préférence une forme de section transversale rectangulaire.

4. Ensemble selon l'une quelconque des revendications précédentes, dans lequel le porte-panneau (2) logé de manière pivotante sur la deuxième partie télescopique (12) peut pivoter au moins entre une position de pivotement pour le rangement du panneau de surlongueur (3), dans laquelle le panneau de surlongueur (3) est approché de la deuxième partie télescopique (12), et une position de pivotement pour l'utilisation du panneau de surlongueur (3), dans laquelle le panneau de surlongueur (3) fait saillie sensiblement perpendiculairement de la deuxième partie télescopique (12).

5. Ensemble selon l'une quelconque des revendications précédentes, dans lequel
- le porte-panneau (2) logé de manière pivotante sur la deuxième partie télescopique (12) présente un contour de réglage (6) avec au moins un évidement (7), lequel peut être mis en prise avec une partie de réglage (8) disposée sur la deuxième partie télescopique (12), et/ou
- le porte-panneau (2) logé de manière pivotante sur la deuxième partie télescopique (12) présente au moins une partie de réglage (9), laquelle peut être mise en prise avec au moins un évidement (10) disposé sur la deuxième partie télescopique (12), et/ou
- le dispositif de support (1) présente deux douilles (13, 14) avec des dentures frontales (15) pouvant être mises en prise, dans lequel la deuxième partie télescopique (12) présente une première douille (13) et le porte-panneau (2) logé de manière pivotante sur la deuxième partie télescopique (12) présente une deuxième douille (14),
dans lequel le porte-panneau (2) peut être bloqué de manière libérable par une mise en prise dans au moins une position de pivotement par rapport à la deuxième partie télescopique (12).

6. Ensemble selon l'une quelconque des revendications précédentes, dans lequel le dispositif de support (1) présente un dispositif de blocage (16) pour bloquer au moins une position télescopique entre l'au moins une première partie télescopique (11) et l'au moins une deuxième partie télescopique (12).

7. Ensemble selon la revendication précédente, dans lequel le dispositif de blocage est disposé sur une extrémité de la première partie télescopique (11) orientée vers le panneau de surlongueur (3).

8. Ensemble selon l'une quelconque des revendications précédentes, dans lequel le dispositif de support (1) présente un système d'éclairage et de signalisation (19) pour l'éclairage du panneau de surlongueur (3) et/ou la signalisation optique de charges en dépassement.

9. Ensemble selon la revendication précédente, dans lequel le système d'éclairage et de signalisation (19) peut être commuté avec un commutateur (20) en fonction
- d'une position télescopique entre l'au moins une première partie télescopique (11) et l'au moins une deuxième partie télescopique (12) et/ou
- d'une position de pivotement du panneau de surlongueur (3) par rapport à la deuxième partie télescopique (12) et/ou
- d'une position de commutation d'un commutateur (20) pouvant être actionné manuellement.

10. Ensemble selon l'une quelconque des deux revendications précédentes, dans lequel une conduite d'alimentation (21) du système d'éclairage et de signalisation (19) est logée dans une zone intérieure de l'au moins une première partie télescopique (11) et de l'au moins une deuxième partie télescopique (12), dans lequel la conduite d'alimentation (21) est de préférence réalisée au moins par sections sous la forme d'un câble spiralé.

11. Ensemble selon l'une quelconque des revendications précédentes, dans lequel le dispositif de support (1) pour le support de l'au moins une deuxième partie télescopique (12) présente dans l'au moins une première partie télescopique (11) au moins un coulisseau (22) déplaçable par rapport à la première partie télescopique (11), dans lequel un jeu de support du dispositif de support (1) est réglable par un déplacement de l'au moins un coulisseau (22).

12. Véhicule de chargement (4) avec un cadre de véhicule (5) et un ensemble composé d'un dispositif de support (1) et d'un panneau de surlongueur (3) selon l'une quelconque des revendications précédentes, dans lequel le dispositif de support (1) peut être relié ou est relié au cadre de véhicule (5) et le panneau de surlongueur (3) avec le dispositif de support (1) est mobile entre au moins une première situation, dans laquelle le panneau de surlongueur (3) peut être disposé sensiblement entièrement à l'extérieur du cadre de véhicule (5) et au moins une deuxième situation, dans laquelle le panneau de surlongueur (3) peut être disposé sensiblement entièrement à l'intérieur du cadre de véhicule (5).

13. Véhicule de chargement (4) selon la revendication précédente, dans lequel le panneau de surlongueur (3) dans une position de pivotement dans laquelle le panneau de surlongueur (3) est approché de la deuxième partie télescopique (12), peut être disposé sensiblement entièrement à l'intérieur du cadre de véhicule (5).
